# NOUVEAU FASCICULE DE BREVET EUROPEEN

(11) **EP 0 842 223 B2**
(45) Date de publication et mention de la décision concernant l'opposition: **12.11.2008**
(45) Mention de la délivrance du brevet: 15.09.2004
(21) Numéro de dépôt: 97927246.5
(22) Date de dépôt: 05.06.1997
(51) Int. Cl.: C08L 77/00, C08L 77/02, C08L 23/08, C08L 101/00, C08F 283/04

(54) **COMPOSITIONS DE RESINES THERMOPLASTIQUES MULTIPHASES**
MEHRPHASIGE THERMOPLASTISCHE HARZZUSAMMENSETZUNGEN
MULTIPHASE THERMOPLASTIC RESIN COMPOSITIONS.

(30) Priorité: 05.06.1996 FR 9606921
(43) Date de publication de la demande: 20.05.1998
(73) Titulaire: ARKEMA FRANCE, 92700 Colombes (FR)
(72) Inventeur: MONTANARI, Thibaut, F-27300 Bernay (FR); GUIBOUIN, Chrystelle, F-27300 Bernay (FR); HERT, Marius, F-27470 Serquigny (FR); PERRET, Patrice, F-27470 Serquigny (FR); THOMASSET, Jacques, F-27300 Bernay (FR)
(74) Mandataire: Dossmann, Gérard
(86) Numéro de dépôt international: PCT/FR1997/001001
(87) Numéro de publication internationale: WO 1997/046619

(56) Documents cités:
- EP-A- 0 234 819
- EP-A- 0 284 379
- EP-A- 0 423 628
- EP-A- 0 436 080
- EP-A- 0 654 505
- EP-A- 0 683 210
- EP-A- 0 731 308
- WO-A-95/27866
- DE-A- 2 044 633
- DE-A- 3 739 089
- DE-A- 19 507 251
- DE-C- 4 025 301
- FR-A- 2 603 292
- FR-A- 2 716 886
- GB-A- 2 287 028
- US-A- 5 070 145
- US-A- 5 221 712
- ANTEC 90,1990,Dagli et al. "Modification of Nylon-6/Polypropylene blends through reactive compatibilization", p.1924-1928
- POLYMER, 1998, Vol 29, Hobbs et al. "Effect of interfacial forces on polymer blend morphologies", p.1598-1602
- Plastic Engineering, July 1991, Modic et al., "Additives",p.37-39
- Journal of Material Science , 1989, Vol 24, Hobbs et al. "Morphology and properties of thoughened poly(phenylene oxide)-polyamide blends", p.2025-2030
- Polymer Engineering and Science, 1990, Vol. 30, No.17, Chambell et al. "Poly(phenylene oxide)/polyamide blends via reactice extrusion", p.1056-1062
- Journal of Material Science, 1991, Vol.26, Sue et al. "Failure mechanisms un alloy of polymide 6,6(polyphenylene oxide under severe conditions, p.3449-3456
- British Plastics and Rubber, March 1989 "Compatibility is crucial in polymer blending", p.15-18
- Martinus Nijhoff Publishers, 1985, Walsh et al. "Polymer blends and mixture", p.413-428
- POLYMER, 1992, Vol. 33, Takeda et al. "Effect of polymide functionality on the morphology and toughness of blends with a functionalized block copolymer", p.3173-3181

## Description

L'invention concerne des compositions de résines thermoplastiques multiphases et plus particulièrement des compositions se présentant sous la forme d'une matrice dans laquelle sont dispersés des nodules encapsulés.

De nombreux thermoplastiques doivent être modifiés par incorporation de caoutchoucs ou d'autres polymères par exemple pour en modifier le module de flexion ou améliorer la résistance au choc.

La demanderesse a découvert que les nodules encapsulés pouvaient être plus petits que les modules formés seulement du polymère de la capsule.

Ceci présente de nombreux avantages, par exemple quand le polymère de la matrice est transparent ou même translucide, la réduction de la taille des nodules augmente la transparence ou le rend plus translucide à taux de phase dispersée constant.

US 5 070 145 décrit des compositions constituées de 80 parties de polyamide-6 (PA-6) ou polyamide-6,6 (PA-6,6) dans lesquelles on a dispersé 20 parties d'un mélange (i) d'un copolymère de l'éthylène et d'un acrylate d'éthyle ou de butyle et (ii) d'un copolymère de l'éthylène, de l'acrylate d'éthyle et de l'anhydride maléique. Ces compositions présentent une bonne résistance au choc.

EP 284 379 décrit des compositions multiphases de polyamide et de copolymère d'éthylène se présentant sous la forme d'une matrice de polyamide dans laquelle sont dispersés des nodules (1) d'un copolymère de l'éthylène, de l'acrylate d'éthyle et de l'anhydride maléique, dans ces nodules (1) sont dispersés des nodules de polyamides. On commence par préparer ces nodules (1) en dispersant du polyamide dans le copolymère d'éthylène puis on réticule, ensuite on disperse ces nodules dans du polyamide. Ces compositions sont aussi présentées comme ayant une bonne résistance au choc.

Le brevet FR 2 719 849 décrit des compositions thermoplastiques consistant en une matrice d'un polymère thermoplastique dans laquelle sont dispersés des nodules d'un deuxième polymère thermoplastique partiellement ou totalement encapsulé par un copolymère d'éthylène. On prépare ces compositions en effectuant d'abord l'encapsulation du deuxième polymère, ensuite on ajoute l'autre polymère formant la matrice dans des conditions telles qu'on ne détruit pas les capsules. Cette préparation est effectuée en deux étapes complètement séparées ou l'une à la suite de l'autre dans la même extrudeuse. Ces compositions présentent à la fois une bonne souplesse et une bonne résistance au choc. Les exemples montrent des matrices de PA-6, PA-12 ou de PBT (polybutylène téréphtalate) dans lesquelles sont dispersés des nodules de PA-6,6 encapsulé par un copolymère d'éthylène, d'acrylate d'éthyle et de méthacrylate de glycidyle. Un exemple comparatif montre que dans une matrice de PA-6 les nodules de PA-6,6 encapsulés par le copolymère d'éthylène sont plus gros que les nodules formés seulement du copolymère d'éthylène.

La présente invention est donc une composition thermoplastique comprenant au moins un polymère (M) formant matrice dans laquelle sont dispersés des nodules d'au moins un polymère (K) encapsulés dans au moins un polymère (S) telle que définie dans la revendication 1.

Le polymère (M) peut être un mélange de plusieurs polymères miscibles et formant une phase homogène. Il en est de même du polymère (K) et du polymère (S). Les compositions de l'invention peuvent aussi comprendre plusieurs types de nodules encapsulés par exemple des nodules de (K1) encapsulés dans (S) et des nodules de (K2) encapsulés dans (S) ou encore des nodules de (K1) encapsulés dans (S1) et des nodules de (K2) encapsulés dans (S2).

Selon la présente invention est une composition thermoplastique comprenant au moins un polymère (M) formant matrice dans laquelle sont dispersés des nodules d'au moins un polymère (K) encapsulés dans au moins un polymère (S) (i) telle que ces nodules encapsulés sont plus petits que les nodules du polymère (S) dispersés dans la matrice (M) et (ii) telle que la proportion de (M) dans les mélanges (M) + (S) soit essentiellement la même que la proportion de (M) dans les mélanges (M) + (S) + (K).

Ainsi on a découvert par exemple que dans une matrice de polyamide 11 (PA-11) les nodules d'un copolymère éthylène/acrylate d'alkyle/anhydride maléique ont une taille de 0,2 µm alors que dans la même matrice les nodules de polyamide 12 (PA-12) encapsulés dans le même copolymère éthylène/acrylate d'alkyle/anhydride maléique ont une taille de 0,07 µm (il s'agit de la taille du nodule Dv (diamètre en volume) avec la capsule c'est-à-dire environ le diamètre extérieur de la capsule).

Les compositions de l'invention présentent de nombreux avantages:
- Elles sont plus stables, la morphologie de la phase dispersée étant plus fine, c'est-à-dire qu'on a surcompatibilisé (M) et (S).
- Elles sont essentiellement aussi flexibles que les compositions de (M) comprenant des nodules contenant seulement (S) car on peut écranter le polymère (K) avec une épaisseur suffisante de capsule (S). On reviendra sur ce point dans la suite du texte.
- Les morphologies plus fines favorisent aussi la tenue des lignes de ressoudure.
- Elles sont très faciles à fabriquer, on procède par simple mélange de (M), (K) et (S) par exemple sur une extrudeuse courte ou peu malaxante (extrudeuse standard ou bas de gamme) ou même directement sur une presse à injecter alors que dans l'art antérieur il est nécessaire d'opérer en 2 étapes.
   Elles présentent une bonne flexibilité sans perte des propriétés mécaniques ; ainsi des compositions constituées de (M), (S) et (K) ayant le même module de flexion que des compositions constituées de (M) et (S) ont une meilleure contrainte en traction. Cette meilleure contrainte peut se traduire aussi par la pression d'éclatement plus élevée d'un tube fabriqué par extrusion des compositions de l'invention.
- Elles ont une bonne résistance au choc.
- (M) n'a besoin que de la majorité relative pour s'imposer en tant que matrice et éviter l'inversion de phase. On pourrait donc par exemple avoir 35 parties de (M), 32,5 parties de (S) et 32,5 parties de (K).
- De plus ces compositions sont particulièrement stables elles peuvent être préparées et vendues sous forme de granulés et utilisées dans des machines conventionnelles, elles peuvent aussi être recyclées, par exemple s'il y a des chutes de fabrication dues à des découpes.

L'invention concerne la réduction de la taille des nodules de (S) quelle que soit leur taille initiale quand on ajoute (K).

Les polymères (M) et (K) sont choisis parmi les thermoplastiques PA11 et PA12. (M) et (S) sont choisis compatibles. (S) étant dispersé dans la matrice de (M) sous forme de nodules, (M) et (S) sont jugés d'autant plus compatibles que les nodules de (S) sont plus petits. Cependant on estime que si les nodules de (S) sont supérieurs à 10 µm c'est peu compatible, si les nodules sont entre 0,5 et 10 µm et de préférence entre 0,5 et 2 µm c'est compatible et en dessous de 0,5 µm très compatible.

(K) doit être compatible avec (S) ; on choisit donc (K) en préparant des dispersion de (K) dans (S) et on mesure la taille des nodules. Il s'agit du critère général de choix, parmi les différents (K) répondant à ce critère on effectue un autre choix en fonction des propriétés recherchées pour les compositions de l'invention. Cet autre choix peut être fonction du module, des propriétés chimiques, de la viscosité, de la température de fusion et de la réactivité.

Comme ci-dessus si les nodules de (K) dans (S) sont supérieurs à 10 µm c'est peu compatible, si les nodules sont entre 0,5 et 10 µm et de préférence entre 0,5 et 2 µm c'est compatible et en dessous de 0,5 µm très compatible.

On dit que la compatibilité de (K) avec (S) est la même que la compatibilité de (S) avec (M) quand les nodules de (S) dans (M) ont la même taille que les nodules de (K) dans (S). Il n'est pas nécessaire que la compatibilité de (K) avec (S) soit supérieure à la compatibilité de (S) avec (M). Avantageusement, la taille des nodules de (K) dans (S) ne doit pas être supérieure à deux fois à la taille des nodules de (S) dans (M) et de préférence elle est sensiblement égale ou inférieure. Cette valeur de deux fois de même que l'expression "sensiblement égale" est à adapter à la taille des nodules en effet la précision de la mesure est plus élevée pour les nodules supérieurs à 1 ou 5 µm que pour les nodules plus petits.

On ne sortirait pas du cadre de l'invention en faisant le test de compatibilité de (K) avec (S) en mesurant des nodules de (S) dans (K) puis en procédant comme décrit ci-dessus.

(K) ne doit pas aussi être trop compatible avec (M) pour qu'ils démixent et que (K) se mette dans la capsule (S). Si (K) est rigoureusement identique à (M) alors on a des nodules de (S) dans (M). Mais (K) et (M) peuvent être par exemple deux polyamides différents ou deux polyamides dérivés des mêmes monomères et de propriétés physiques différentes. On effectue donc les mesures de compatibilité de (M) avec (S) et de (K) avec (S) comme indiqué précédemment et on vérifie si (K) s'encapsule dans (S) quand on fait le mélange de (M), (K) et (S). Avantageusement (M) et (K) sont choisis dans la même famille de polymères par exemple les polyamides, les polyesters saturés et d'autres ainsi qu'il est décrit plus loin. Ainsi (M) et (K) peuvent être deux polyamides, deux polyesters, etc...

Il faut aussi vérifier la réduction de la taille des nodules.

Le mélange de (M) (K) et (S) est fait avantageusement à partir de (M), (K) et (S) qu'on introduit simultanément dans un dispositif de mélange de (K) dans le mélange de (M) et (S), ou de (M) dans le mélange de (K) et (S) ou encore (S) dans le mélange de (K) et (M). Cependant, on ne sortirait pas du cadre de l'invention en utilisant différentes étapes ou des ordres d'ajout différents pourvu qu'on obtienne la morphologie désirée.

En plus des conditions de compatibilité ou d'incompatibilité, l'indice de fluidité (MFI) de (M) est avantageusement supérieur à celui de (K).

Comme polymères (M), on peut citer les polyamides 11 et 12.

On entend par polyamide (A) les produits de condensation :
- d'un ou plusieurs aminoacides, tels les acides amino-11-undécanoïque et amino-12-dodécanoïque d'un ou plusieurs lactames tels que lauryllactame.

A titre d'exemples de polymères (K) on peut citer les mêmes exemples que les polymères (M).

Le polymère (S) est un produit qui encapsule (K) dans une matrice (M) et tel que les nodules ainsi encapsulés sont plus petits que les nodules de (S) dans (M). Au sens de la présente invention (S) est un produit qui se met sous forme de nodules dans une matrice (M) et qui se met aussi sous forme de nodules dans une matrice (K) ou qui peut être une matrice contenant des nodules (K). Selon l'invention, (S) est un thermoplastique ayant des affinités avec (M) et avec (K) et/ou pouvant réagir avec (M) et (K) ou ayant des affinités avec (M) et pouvant réagir avec (K) ou vice versa.

On peut citer :
- les copolymères éthylène / acétate de vinyle / (méth)acrylate de glycidyle ou les copolymères éthylène / (méth)acrylate d'alkyle / (méth)acrylate de glycidyle.

Avantageusement, (S) est choisi parmi les copolymères éthylène / (méth)acrytate d'alkyle / anhydride maléique, les copolymères éthylène / acétate de vinyle / anhydride maléique.

De préférence, c'est un copolymère éthylène / (méth)acrylate d'alkyle / anhydride maléique comprenant jusqu'à 40% en poids de (méth)acrylate d'alkyle et jusqu'à 10% en poids d'anhydride maléique.Le (méth)acrylate d'alkyle peut être choisi parmi l'acrylate de méthyle, l'acrylate d'éthyle, l'acrylate de n-butyle, l'acrylate d'isobutyle, l'acrylate d'éthyl-2-hexyle, l'acrylate de cyclohexyle, le méthacrylate de méthyle et le méthacrylate d'éthyle.

Les polymères (M) (K) et (S) peuvent contenir des plastifiants, des charges, des ignifugeants, des fibres de verre etc...

La demanderesse a aussi découvert que le rapport entre les quantités de (S) et les quantités de (K) était important. Pour des valeurs théoriques, c'est-à-dire supposant que tout (K) est encapsulé, de l'épaisseur de la capsule, c'est-à-dire de (S), comprise entre 10 et 30% du diamètre du nodule encapsulé, c'est-à-dire de l'ensemble (S) + (K) les compositions de l'invention bénéficient le plus de la présence conjointe de (S) et de (K).

Pour des valeurs supérieures et avantageusement supérieures à 40% il y a "écrantage", le nodule encapsulé produit les effets d'un nodule de même taille constitué seulement de (S) c'est-à-dire comme si (K) avait été remplacé par (S). L'avantage de l'invention est néanmoins d'avoir réduit la taille des nodules. Par exemple les polymères (M) doivent contenir des nodules de (S) pour obtenir telle ou telle propriété, ces nodules sont trop gros, alors on ajoute le polymère (K) et on réduit la taille de nodules. (K) peut être quelconque, pourvu qu'il réduise la taille des nodules. On garde ainsi les propriétés de flexibilité et de choc mais on gagne par exemple en transparence si (M) est adéquat, ceci en plus de l'avantage du procédé en une étape déjà cité.

Pour des valeurs inférieures de l'épaisseur de la capsule c'est-à-dire jusqu'à des valeurs justes suffisantes pour que (M) (K) et (S) soient conformes à l'invention c'est-à-dire soient tels que les nodules de (K) encapsulés par (S) soient plus petits que les nodules de (S) seuls dans (M) on "ajoute" les propriétés de (K) à celles de (M).

Pour les épaisseurs moyennes de (S) précitées les compositions de l'invention bénéficient des effets de (S) et de (K).

On peut aussi être dans un cas limite où, à faible déformation, essentiellement (S) écrante (K) et où, à forte déformation, (S) commence à ne plus écranter (K). (K) commence alors à jouer un rôle (structurel) en apportant un surcroît de résistance (pourvu que (K) ait été choisi pour posséder ces propriétés.

Ainsi par exemple les mesures de flexibilité et de résistance au choc seraient pleinement améliorées car (S) (en l'occurrence un modifiant choc très souple) écrante pleinement (K). En revanche, lors d'un éclatement du tube (propriété destructive donc corollaire de fortes déformations), le nodule va se déformer de telle sorte (épaisseur diminuant dans le sens perpendiculaire à la déformation) que (S) n'écrante plus totalement (K) et (K) donne alors un surcroît de résistance.

On ne sortirait pas du cadre de l'invention si les capsules de (S) n'étaient pas parfaitement autour de (K) c'est-à-dire que l'encapsulation était partielle, pourvu que la taille des nodules soit conforme à l'invention.

Selon l'invention, (M) et (K) sont choisis dans la même famille de polymères et (S) est choisi parmi les copolymères éthylène/(meth)acrylate d'alkylelanhydride maléique, les copolymères éthylène/acétate de vinyle/anhydride maléique, les copolymères éthylène/(meth)acrylate d'alkylel(meth)acrylate de glycidyle et les copolymères éthylène/acétate de vinylel(meth)acrylate de glycidyle.

Selon l'invention (M) et (K), dans la même famille de polymères, sont aussi choisis très proches, tels que le PA.11 et le PA.12

Selon des formes préférées de l'invention on choisit respectivement pour (M), (S) et (K) des polymères ayant les propriétés ou les caractéristiques suivantes :
rigide / souple / rigide
Tg haute / Tg basse / Tg haute
Tg >0°C / Tg <0°C / Tg >0°C (Tg désigne la température de transition vitreuse)
semi cristallin / amorphe ou quasi amorphe / semi cristallin
cristallin / amorphe ou quasi amorphe / cristallin

### Exemples

On désigne par PA-11 : un polyamide 11 de Mw [ 45 000 à 55 000 ] et ne contenant pas de plastifiant.

PA-11 p.20 : un polyamide 11 de type PA-11 contenant (7 ± 2) % en poids de BBSA (butyl benzène sulfonamide) comme plastifiant.

PA-11 p.40 : un polyamide 11 de type PA-11 contenant (12 ± 2) % en poids de BBSA.

PA-12 : un polyamide 12 de Mw 45 000 à 55 000.

L : un copolymère éthylène/acrylate de butyle/anhydride maléique de proportions en poids 79/18/3 de MFI 3 à 6 qui est un copolymère statistique obtenu par catalyse radicalaire haute pression

MFI désigne l'indice de fluidité (Melt Flow Index).

LOTRYL un copolymère éthylènelacrylate de méthyle de proportions en poids 84/16 et MFI 0,3 à 190°C 2,16 kg.

PA-12 p. 20 un polyamide 12 contenant (7 ± 2) % en poids de BBSA.

PA-12 p. 40 un polyamide 12 contenant (12 ± 2) % en poids de BBSA.

EPRₘ désigne un EPR (copolymère éthylène propylène) maléisé.

Les résultats sont reportés sur le tableau suivant (les % sont en poids). Les compositions indiquées dans le tableau correspondent à un total de 100 %, le pourcentage du produit majoritaire ne figure pas. Ex. : PA-11 p.20 + 6 % L + 6 % PA-12 veut dire qu'il y a 88 % de PA-11 p.20 dans la composition.

Dans l'exemple 20 (PA-11 + 5 % PASA) veut dire un polyamide 11 contenant 95 % de PA-11 et 5 % de PASA.

PASA désigne un polyamide semi aromatique obtenu par condensation de lauryllactame, BMACM [bis-(3 methyl-4-aminocyclohexyl) methane] d'acide isophtalique et d'acide terephtalique tel que décrit dans EP 550308.

Dans le tableau le "module de flexion attendu" désigne le module de flexion calculé à partir des pourcentages des constituants sans tenir compte d'une synergie des constituants ou de la morphologie. Ainsi dans l'exemple 5 on attend 600 MPa parce qu'il y a la même quantité de PA et qu'on a mesuré 600 MPa pour l'exemple 3 (on a négligé la différence de module du PA 11 et du PA 12).

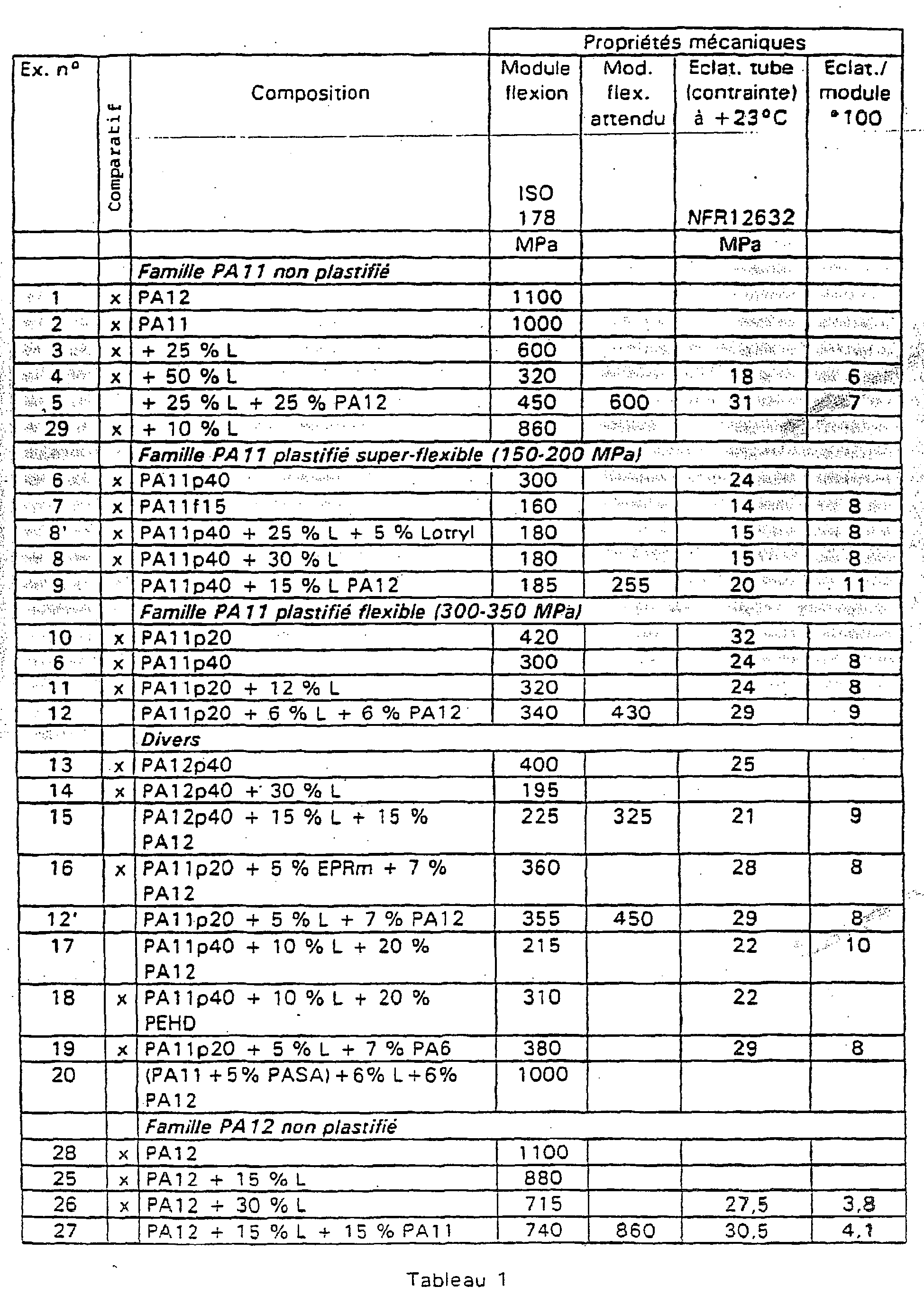

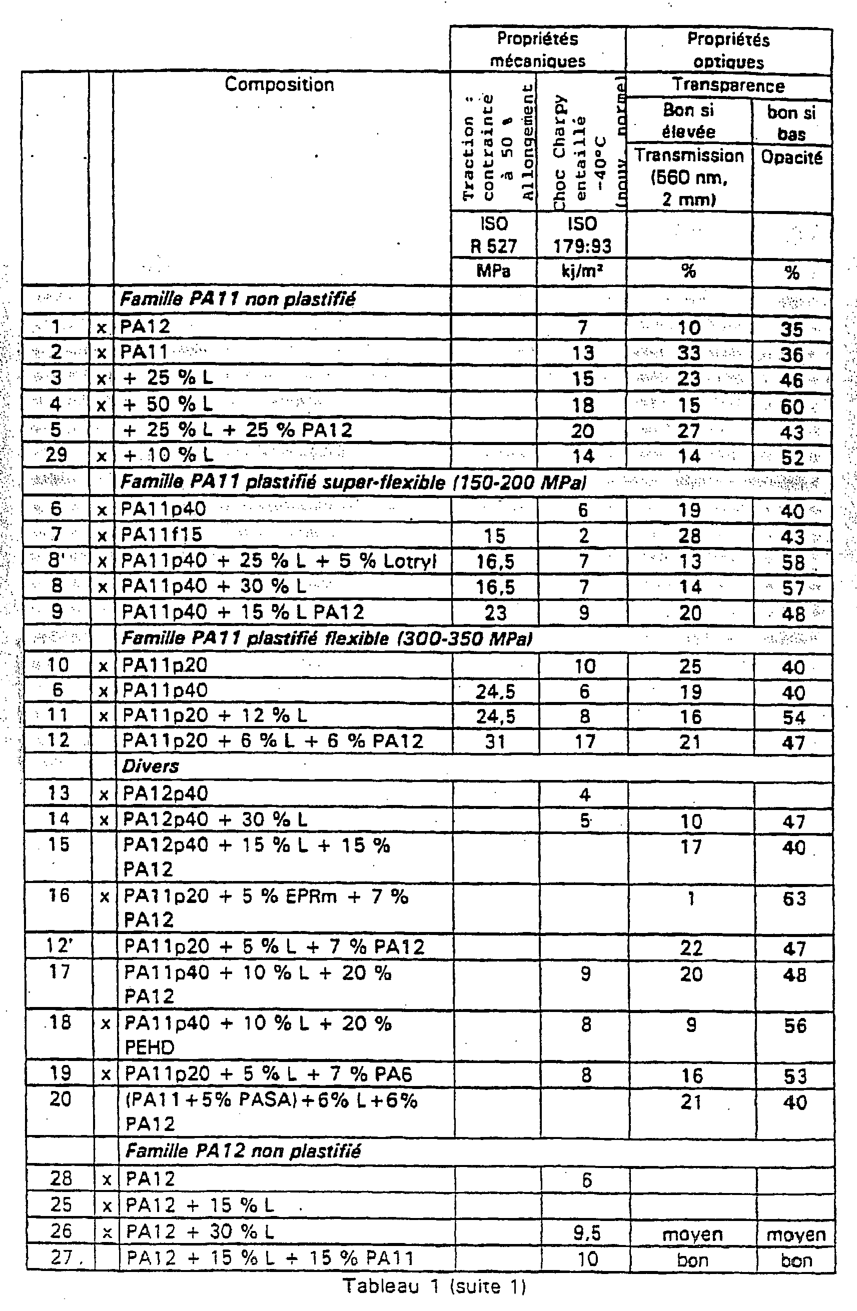

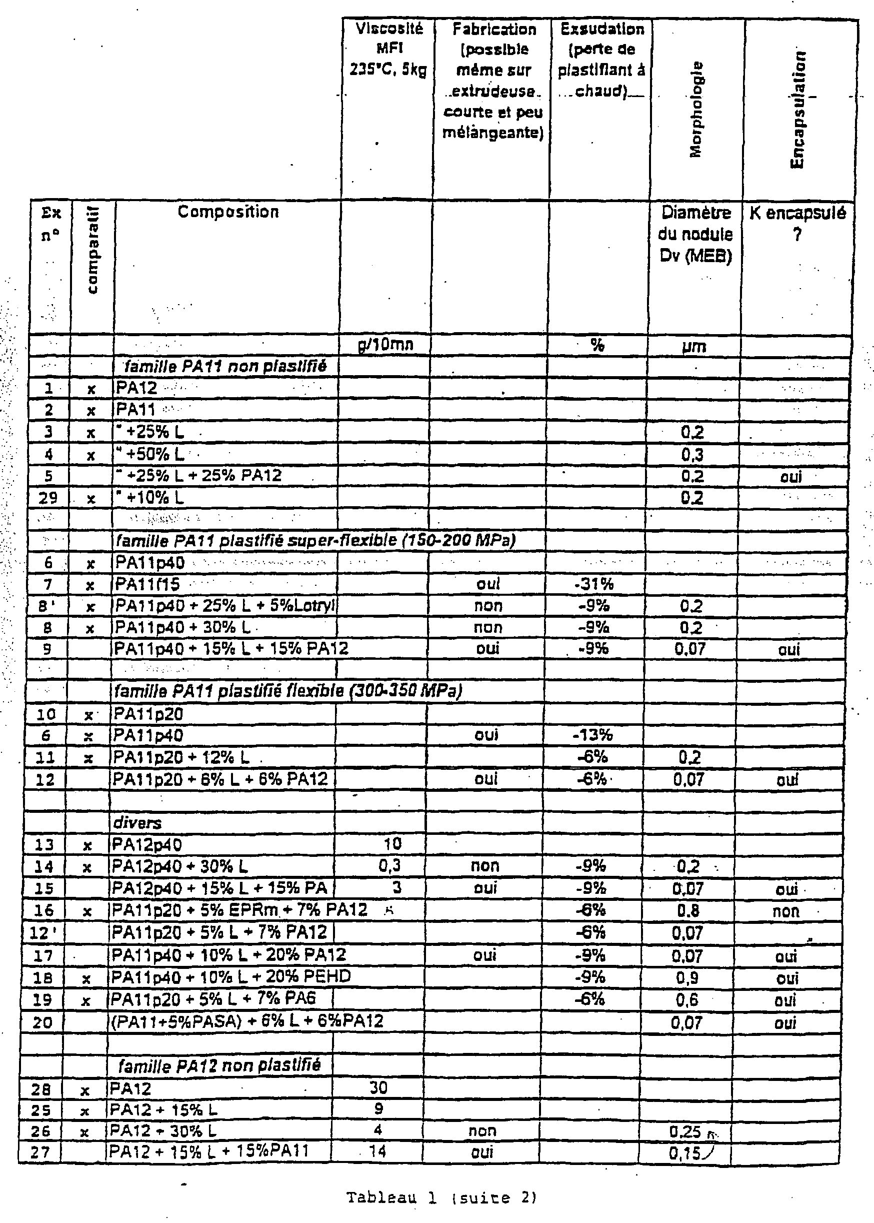

## Revendications

1. Composition thermoplastique comprenant au moins un polymère (M) formant matrice dans laquelle sont dispersés des nodules d'au moins un polymère (K) encapsulés dans au moins un polymère (S) telle que ces nodules encapsulés sont plus petits que les nodules du polymère (S) seuls dispersés dans la matrice (M), (M) et (K) étant choisis parmi le PA11 et le PA12 et (S) étant choisi parmi les copolymères éthylène/(meth)acrylate d'alkylelanhydride maléique, les copolymères éthylène/acétate de vinyle/anhydride maléique, les copolymères éthylène/(meth)acrylate d'alkylel(meth)acrylate de glycidyle et les copolymères éthylène/acétate de vinylel(meth)acrylate de glycidyle, et telle que la proportion de (M) dans les mélanges (M) + (S) est essentiellement la même proportion de (M) dans les mélanges (M) + (S) + (K).

2. Composition selon l'une des revendications précédentes dans laquelle (M) est le PA-11, (S) est un copolymère éthylène/(méth)acrylate d'alhyle/anhydride maléique et (K) le PA-12.

3. Composition selon l'une des revendications précédentes dans laquelle l'épaisseur de la capsule est comprise entre 10 et 30% du diamètre du nodule encapsulé (S) + (K).

## Claims

1. Thermoplastic composition comprising at least one polymer (M) forming a matrix in which are dispersed nodules of at least one polymer (K) which are encapsulated in at least one polymer (S) in such a way that these encapsulated nodules are smaller than the nodules of the polymer (S) which are dispersed in the matrix (M), (M) and (K) being selected from PA-11 and PA-12, and (S) being selected from ethylene/alkyl (meth)acrylate/maleic anhydride copolymers, ethylene/vinyl acetate/maleic anhydride copolymers, ethylene/alkyl (meth)acrylate/glycidyl (meth)acrylate copolymers and ethylene/vinyl acetate/glycidyl (meth)acrylate, and such that the proportion of (M) in the (M)+(S) mixtures is essentially the same as the proportion of (M) in the (M)+(S)+(K) mixtures.

2. Composition according to one of the preceding claims, in which (M) is PA-11, (S) is an ethylene/alkyl (meth)acrylate/maleic anhydride copolymer and (K) is PA-12.

3. Composition according to one of the preceding claims, in which the thickness of the capsule is between 10 and 30% of the diameter of the encapsulated nodule (S)+(K).

## Patentansprüche

1. Thermoplastische Zusammensetzung, umfassend mindestens ein Polymer (M), das eine Matrize bildet, in der Knoten von mindestens einem Polymer (K) verstreut sind, eingekapselt in mindestens ein weiteres Polymer (S), das so beschaffen ist, dass diese eingekapselten Knoten kleiner sind als die Knoten des Polymers (S), die nur in der Matrize (M) verstreut sind, wobei (M) und (K) ausgewählt sind unter PA-11 und PA-12, und wobei (S) ausgewählt ist unter den Ethylen/Alkyl-(meth)acrylat/Maleinsaüreanhydrid-Copolymeren, den Ethylen/Vinylazetat/Maleinsaüreeanhydrid-Copolymeren, den Ethylen/Alkyl-(meth)acrylat/Glycidyl-(meth)acrylat-Copolymeren und den Ethylen/Vinylazetat/Glycidyl-(meth)acrylat-Copolymeren, und das so beschaffen ist, dass der Anteil an (M) in den Mischungen (M)+(S) im wesentlichen der gleiche ist wie der Anteil an (M) in den Mischungen (M)+(S)+(K).

2. Zusammensetzung nach einem der vorhergehenden Ansprüche, wobei (M) für PA-11 steht, (S) für ein Ethylen/Alkyl-(meth)acrylat/Maleinsaüreanhydrid-Copolymer steht, und (K) für PA-12 steht.

3. Zusammensetzung nach einem der vorhergehenden Ansprüche, wobei die Dicke der Kapsel zwischen 10 and 30% des Durchmessers des eingekapselten Knotens (S)+(K) beträgt.
